# EUROPEAN PATENT APPLICATION

(11) **EP 1 842 641 A1**
(43) Date of publication of application: **10.10.2007**
(21) Application number: 06425230.7
(22) Date of filing: 03.04.2006
(51) Int. Cl.: B28B 11/04, C03C 8/00

(54) **Process for making tiles with refracting and reflecting surface and product obtained with it**

(71) Applicant: Valle, Fabio, 36027 Bassano del Grappa (VI) (IT)
(72) Inventor: Valle, Fabio, 36027 Bassano del Grappa (VI) (IT)
(74) Representative: Vinci, Marcello

(57) **Abstract**

The invention is a new process for making tiles for indoor and outdoor floors and for indoor and outdoor wall coverings, including the phases of making the mix for the support (P) and moulding said support (P) itself, characterised in that it comprises also the application or scattering of a plurality of spheres or microspheres (M) on part or all of the surface of said support (P), before and/or after one or more firing phases of the support (P) itself.

## Description

The present patent concerns ceramic tiles for indoor and/or outdoor floors and indoor or outdoor wall coverings, and processes for making them, and in particular it concerns a new process for making tiles with a wholly or partially refracting and reflecting surface and the product obtained.

Ceramic tiles used for flooring and wall covering are known. The known ceramic tiles therefore fulfil two functions, an aesthetic, decorating function and a technical function, since they are resistant to stress and wear.

The known tiles are flat slabs in various formats made of ceramic material, obtained by mixing various materials such as clay, sand and other natural substances.

In particular, the known ceramic tiles contain a clay fraction with a plasticising function, an inert fraction, usually sand, and a binding fraction, such as feldspar or other materials.

The mix obtained by blending these raw materials is then subjected to the moulding phase, during which the mix is given the desired size and shape.

Moulding may be carried out by pressing or by extrusion.

In the first case, the mix in powder form is compacted and pressed under high pressure between two surfaces, one of which can be moved, while the other one is fixed.

This pressure causes the formation of structural bonds between the particles that make up the mix and gives the tile its characteristic compactness.

In the case of extruded tiles, the raw materials are worked to produce a plastic mix, that is, a paste suited to be extruded through holes with a specific shape and dimension.

A continuous cord is therefore obtained, which is then cut into the desired dimensions. The product obtained from this moulding phase assumes the name of support or body of the tile.

Said support is then subjected to drying, during which the humidity content is eliminated from the support, to avoid cracking and deformations during the subsequent firing phase.

Glazed tiles are also known, that is tiles covered with a substantially vitreous layer, with a base of quartz, feldspar or other material, which gives the tile good waterproof characteristics, resistance to wear, brightness.

In detail, to carry out the glazing operation, the raw materials, that is quartz, feldspar, pigments and/or other materials, are first of all ground to a powder. The glazing mix is then prepared, for example making a suspension in water, which is then distributed over the support surface to form a coat of glaze.

Alternatively, a dry glazing process is known, where the glazing mix is distributed over the support surface in granular form. The subsequent firing of the support causes the vitrification of said coat of glaze.

The single-firing process and the double-firing process of said support are known. In the first case, glazing is carried out by sprinkling said glazing suspension onto the unfired support and firing is completed in one single operation.

Instead, in the case of double-firing, the unglazed support is first fired, then glazed and then subjected to a further final firing operation.

With double-firing, very bright and lightweight tiles are obtained.

On the other hand, single-firing gives the tile a lower resistance to wear, to chipping and to impacts.

Various types of tiles are known, such as clinker, terracotta, stoneware, porcelain stoneware, etc., each obtained with particular processes.

For example, clinker is obtained by extrusion of a plastic mix, glazing and subsequent firing at a high temperature.

Clinker is highly resistant to compression, wear, extremes of temperature, the action of acids, and is effectively used for outdoor flooring.

Porcelain stoneware, on the other hand, is obtained by pressing the mix and then firing it. Glazing is not performed and, to give the end product a shine, a polishing operation may be carried out.

Tiles of different shapes are known, typically square or rectangular with various dimensions, and a thickness variable from a few millimetres to 2-2.5 cm.

Tiles in various colours are known, with or without decorations.

The present patent concerns a new process for making a new type of tile with a wholly or partially refracting and reflecting surface and the product obtained.

The main aim of the present invention is to propose a new type of tile for floors and wall coverings, to be used both indoors and outdoors, with innovative and original aesthetic characteristics.

Another aim of the present invention is to propose tiles characterised by a high shine and brightness.

Another aim of the present invention is to propose tiles with excellent technical qualities of resistance to stress, wear and chipping.

These and other direct and complementary aims are achieved by the new process for making a new type of tile with a wholly or partially refracting and reflecting surface and the product obtained with it.

The new tile is obtained according to the process comprising the following phases:
1. preparation of the mix, of the type commonly used for making tiles, comprising raw materials such as clay, sand and other natural or non natural material;
2. moulding of the support or body of the tile;
3. possible glazing of part or all of the surface of said support;
4. scattering of refracting spheres or microspheres on part or all of the surface of said support;
5. final firing.

It is possible to include one or more firing phases before and/or after the glazing operation.

Said refracting spheres or microspheres and said glazing mix, comprising raw materials such as quartz, feldspar, sand, pigments or other, may be applied to the surface of the support at the same time. In this case, said spheres or microspheres and said glazing mix, combined and mixed, are applied dry or in a suspension on the surface of said unfired support.

The product thus obtained is then subjected to final firing.

The scattering of said spheres or microspheres may be carried out even after applying the glazing mix, that is in a separate phase.

According to the invention, in the new process said unfired support may be subjected to firing even before the phase of glazing and scattering of said microspheres.

If the glazing operation is not included in the process, said spheres or microspheres are scattered on the surface of the support preferably before firing.

Said spheres or microspheres are made of a vitreous, ceramic or plastic material, they may be normal or oriented, that is, partly coated with highly reflecting chromium-plated material, and they have dimensions in the order of around one millimetre or one tenth of a millimetre.

Said spheres or microspheres have considerable refracting properties, that is they reflect even the minimum amount of light projected onto them, and are thus extremely bright even in poor lighting conditions.

The new ceramic tile obtained with the process described therefore comprises a support or central body with an exposed upper surface, glazed or not glazed, on which a plurality of said refracting spheres or microspheres is spread.

Said spheres or microspheres give the new tile characteristics of brightness or brilliance.

Said tiles may have any shape or size and may be used for indoor or outdoor flooring, for covering walls, stairs, and for any type of public or private environment.

The characteristics of the process will be highlighted in greater detail in the following description, with reference to the drawing, given purely as an example without limitation.

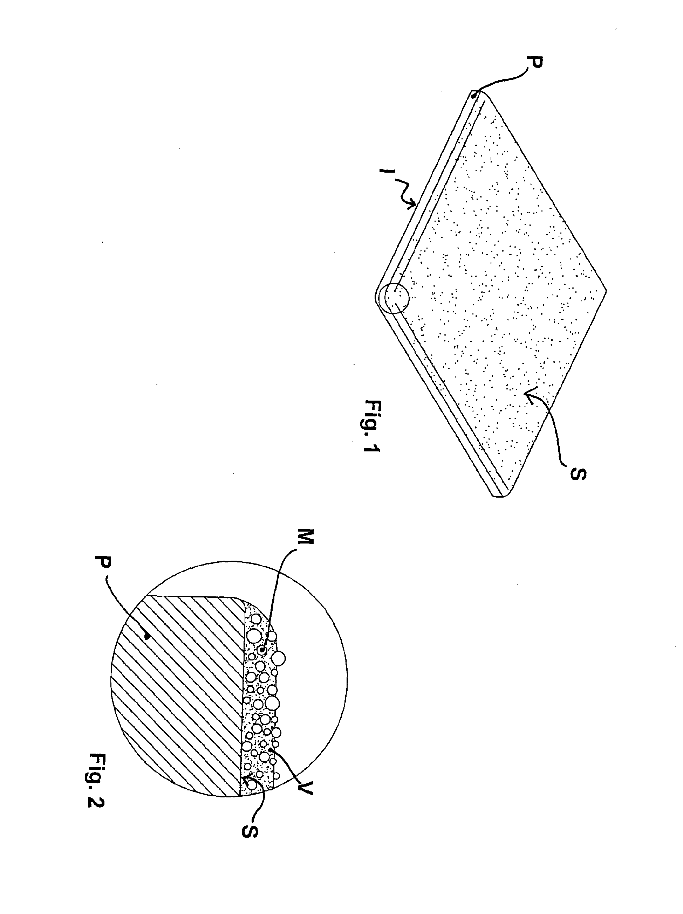

Figure 1 shows a three-dimensional view of the invention, while Figure 2 shows a schematic view of a section of the invention.

The new tile has for example a square or rectangular or other shape and comprises a central body or support (P) with a thickness of about 0.5-2.5 cm.

Said tile comprises a lower surface (I) in contact with the floor foundation and an exposed upper surface (S).

Said upper surface (S) may be glazed or not glazed, that is, covered with a layer (V) of glazing mix, composed of substances such as quartz, feldspar and which, when fired, create a vitrified layer, waterproof and resistant to wear and to chipping.

Said vitrified layer (V) may also be coloured or decorated.

A plurality of spheres or microspheres (M), having dimensions in the order of around one millimetre or one tenth of a millimetre and made of a vitreous material, ceramic or plastic, are distributed on a part or on the whole of said upper surface (S).

Said spheres or microspheres (M) may be normal or oriented and they have considerable refracting properties.

Said spheres or microspheres (M) may be incorporated in said vitrified layer, as shown in Figure 1, or distributed on top of said layer (V) of glazing mix or distributed directly on said upper surface (S) of said support (P).

Therefore, with reference to the above description and to the attached drawing, the following claims are expressed.

## Claims

1. New process for making tiles for indoor and outdoor floors and for indoor and outdoor wall coverings, including the phases of making the mix for the support (P) and the moulding of said support (P) itself, **characterised in that** it comprises also the application or scattering of a plurality of spheres or microspheres (M) on part or all of the surface of said support (P), before and/or after one or more firing phases of the support (P) itself.

2. New process according to claim 1, **characterised in that** it comprises also the glazing phase, which is carried out before and/or after said phase of scattering said spheres or microspheres (M).

3. New process according to claim 1, **characterised in that** it comprises also the glazing phase, which in turn comprises the following phases:
• preparation of the glazing powders, such as quartz, feldspar, pigments, etcetera;
• mixing of said powders with said spheres or microspheres (M);
• preparation of the suspension to be applied to all or part of the surface of said support;
• application of the suspension to part or all of the surface of said support,
and wherein said glazing phase precedes and/or follows said firing phase(s).

4. New process according to claims 1, 2, 3, **characterised in that** said spheres or microspheres (M) are vitreous.

5. New process according to claims 1, 2, 3, **characterised in that** said spheres or microspheres (M) are ceramic.

6. New process according to claims 1, 2, 3, **characterised in that** said spheres or microspheres (M) are plastic.

7. New process according to the previous claims, **characterised in that** said spheres or microspheres (M) are oriented.

8. New tile obtained according to one or more of the previous claims, **characterised in that** the exposed upper surface (S) is partially or totally scattered with a plurality of said spheres or microspheres (M).

9. New tile obtained according to one or more of the previous claims, **characterised in that** the exposed upper surface (S) is partially or completely glazed.
